# EUROPEAN PATENT APPLICATION

(11) **EP 1 732 060 A2**
(43) Date of publication of application: **13.12.2006**
(21) Application number: 06076113.7
(22) Date of filing: 26.05.2006
(51) Int. Cl.: G09G 3/34, G06F 17/30, G06F 3/147

(54) **System and method for using a label to reduce the power consumption of a light source**

(30) Priority: 09.06.2005 US 149807
(71) Applicant: Delphi Technologies, Inc., Troy, Michigan 48007 (US)
(72) Inventor: Farrow, Daniel W., Oro Valley, AZ 85737 (US)
(74) Representative: Denton, Michael John

(57) **Abstract**

The power consumed by a light source associated with a device (34) can be reduced by selectively influencing the activation and deactivation of the light source. A label (24) associated with a unit (22) of content that is "playable" on the device (34) can selectively influence the activation and deactivation of the device (34). By a way of example, a light source associated with a satellite radio could automatically turn on when a new song starts to play. Different embodiments can involve vastly different types of content, remote devices, and activation/deactivation triggers.

## Description

### BACKGROUND OF THE INVENTION

The invention relates generally to systems and methods (collectively the "system") for reducing the power used to illuminate a display. More specifically, the system reduces the power consumption of a light source such as a backlight by using a label to influence the operating status of the light source.

Portable electronic devices are often constrained by the need for power. Portable electronic devices that play media content ("media content players" or simply "players") typically rely on batteries for power. There are often several different tradeoffs in the design and functionality of portable devices that relate to the power consumption of the device, and the amount of power that can be stored in a battery within the device.

For example, if the backlight on a display component for a media content player is active without interruption, the player will quickly lose power and be in constant need of recharging. If a light source is not continuously active due to power consumption constraints, the very darkness that makes a backlight desirable makes it difficult for a user to manually turn on or turn off the backlight.

### SUMMARY OF THE INVENTION

The invention relates generally to systems and methods (collectively the "system") for reducing the power used to illuminate a display. More specifically, the system reduces the power consumption of a light source such as a backlight by using a label to influence the operating status of the light source.

A unit of content being played by the media player can be associated with a label. The contents of the label or a change in the contents of a label can influence the operation of the light source. In an example where the unit of content is a song and the label can include the name of the song and the name of the performer, a change in the label can trigger the automatic activation of the light source. In some embodiments, the light source can also be automatically deactivated through the application of a deactivation heuristic.

In some embodiments of the system, the units of content are transmitted to the media player from a remote source. In other embodiments, units of content can be accessed in a stored form, such as a CD, a DVD, or some other form of memory component.

Some user interfaces of the system may include a setup interface so that the individual user can determine the length of time in which the backlight will automatically operate in response to a change in the content unit being played by the media player.

The present invention will be more fully understood upon reading the following detailed description in conjunction with the accompanying drawings.

### BRIEF DESCRIPTION OF THE DRAWINGS

Figure 1 is a block diagram illustrating some examples of elements that can be included in the system for playing media content.
Figure 2 is a block diagram illustrating an example of a subsystemlevel view of a system for playing media content.
Figure 3 is a block diagram illustrating an example of a subsystemlevel view of a system for playing media content.
Figure 4 is a flow chart diagram illustrating an example of a process for influencing the activation of a light source.
Figure 5 is a flow chart diagram illustrating an example of a process for activating and deactivating a light source.
Figure 6 is a flow chart diagram illustrating an example of a process for loading a configuration heuristic into a player device.

### DESCRIPTION OF THE PREFERRED EMBODIMENTS

### I. Overview and introduction of elements

The invention relates generally to systems and methods (collectively the "system") for reducing the power used to illuminate a display. More specifically, the system reduces the power consumption of a light source such as a backlight by using a label to influence the operating status of the light source.

It is not always convenient for users to manually activate or deactivate light sources for illuminating displays on media players. Such inconveniences can be magnified considerably in the context of a media player being used within a vehicle, because the operator of the media player is often the driver of the vehicle.

Media content such as songs can be associated with labels identifying the media content. This can be done whether the content is distributed from a remote broadcasting source, such as by digital satellite radio, or whether the content is distributed within a tangible medium, such as a CD, DVD, etc.

Media players can be configured to activate and deactivate applicable light sources, including but not limited to backlight displays, by automating processing based on changes in the labels. For example, a light source can be automatically activated for a predetermined period of time after a label changes. The identification of a new song can trigger an automated activation of a light source in accordance with parameters defined by the user.

By automating such processing, users are not inconvenienced by the need to activate and/or deactivate light sources, while at the same time, needless power consumption can also be avoided.

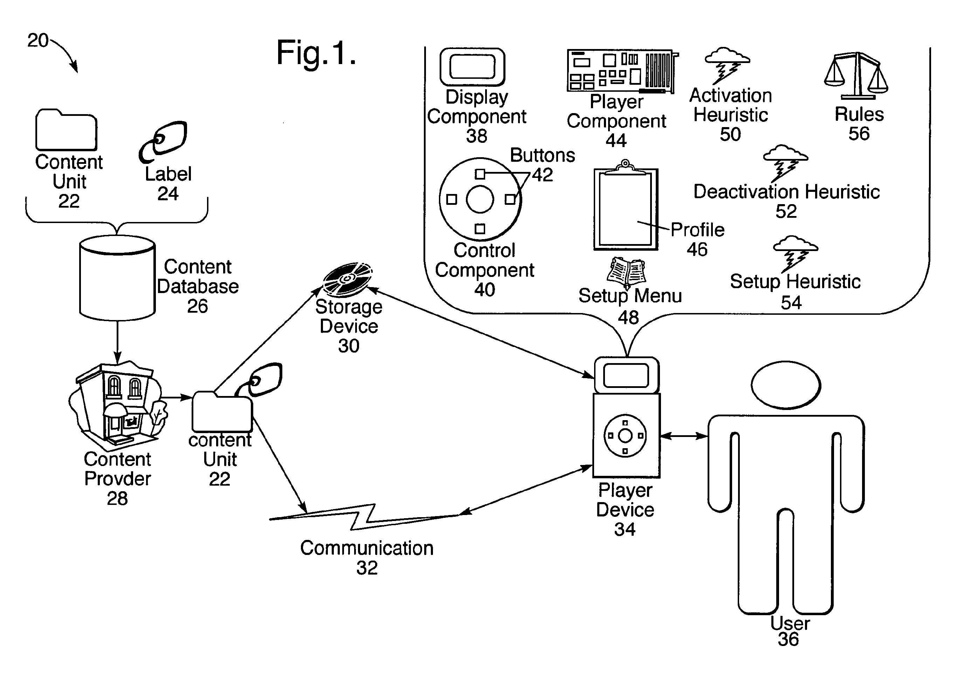

Figure 1 is a block diagram illustrating some examples of elements that can be included in a system 20 for playing media content.

### A) Content Units

A content unit 22 is a unit of media content that is played on a player device 34. In an embodiment of the system 20 in which music is played, a content unit 22 is typically an individual song. In other embodiments, a content unit 22 could be an entire album, a portion of an individual song, a movie, a scene within a movie, a video game, a particular section within a video game, or any other unit of content capable of being played on the player 34. In some embodiments, the scope of the content unit 22 can be defined by a user 36. For example, an individual user 36 could "break down" a song into several sections, with each section constituting a distinct content unit 22.

### B) Labels

A label 24 is metadata or any information that is associated with a content unit 22. A label 24 is often a digital label that is embedded into a content unit 22. In the context of a music playing device, a label 24 can potentially include the name of the song, the name of the artist, the name of the album, and any other information relating to the content unit 22. Different types of content units 22 can involve different types of information being included within a label 24. For example, in a movie playing context, the label 24 could include information about the director and/or actors, and in a videogame playing context, the label 24 could include a current score. The types of information that can be incorporated into a label 24 is potentially limitless. A content provider 28 or some other entity involved in distributing the content unit 22 can make the decision as to what types of information should be included within labels 24 for a particular embodiment of the system 20.

### C) Content Database

A database 26 of content, which can also be referred to as a content database 26, can be used by system 20 to store content units 22 and labels 24. The content units 22 and labels 24 stored in one or more content databases 26 used by the system 20 can be made accessible to a user 36 in many different ways using many different types of technologies. The content units 22 and labels 24 within the content database 26 can be distributed in a variety of different ways, some of which are identified below.

The system 20 can include a wide variety of different content databases 26 operated and controlled by one or more content providers 28.

### D) Content Providers

The system 20 can be used to distribute content units 22 from one or more content providers 28. Content providers 28 can also be referred to as providers 28. Some content providers 28 may focus on a single type of content unit 22 such as music, while others may be involved in many different types of content units 22.

Content providers 28 can also distribute content units 22 in a wide variety of different ways using a wide variety of different technologies. As illustrated in the Figure, content units 22 are associated with labels 24 before the content units 22 are distributed to users 36.

### 1) Storage Devices

One category of distribution techniques is the use of a storage device 30 that is distributed to users 36. For example, music content units 22 can be distributed in the form of cassette tapes, records, CDs, DVDs, MP3 files, etc. A device capable of storing a content unit 22 can constitute a storage device 30. It is anticipated that new and improved storage devices 30 will be created in the future, and that the system 20 will incorporate such advances.

### 2) Communications

Another category of distribution techniques involves the transmission of a content unit 22 from a remote source using a communication 32. For example, music content units 22 can be transmitted to users 36 via satellite radio communications 32. A communication 32 can include any technology or process for exchanging information between a source device and a recipient device. Radio, satellite radio, broadcast television, cable television, computer networks, and the Internet are common examples of communications 32. It is anticipated that new and improved communications 32 will be created in the future, and that the system 20 will incorporate such advances.

### E. Player Device

A player device 34 is any device capable of "playing" or otherwise using or benefiting from a content unit 22. The variety of player devices 34 is commensurate to the variety of different types of content units 22. Player devices 34 can also be referred to as players 34.

Examples of players 34 can include radios, satellite radios, CD players, DVD players, PDAs, cell phones, portable music players, and a variety of other portable and stationary devices.

Regardless of the particular type of player 34. a player 34 typically includes a display component 38, a control component 40, and a player component 44.

### 1) Display Component

A display component 38 is the means by which the label is made accessible to the user 36. For a example, in some music playing device 34 embodiments, a small display component 38 may display the name of the song currently being played by the player 34.

The display component 38 in many embodiments of the system 20 will include a "backlight" to light up the display component 38 when the system 20 is being used in a semi-dark or dark environment. In other embodiments, an external lamp or other form of "light source" is used to illuminate the display component 38. In other embodiments, the display component may be self illuminating (such as an LED array) and will not need a backlight or any form of external lighting. Regardless of the type of display component or light source use to enhance the visibility of the display component, the system 20 can influence and even automate the activation and deactivation of the light source in such a manner as to reduce the power consumed by the player 34.

For example, in an embodiment involving the playing of music, a backlight in the display component 38 can be configured to activate whenever a label 24 changes, indicating for example, that a new song is being played. The player 34 can also be configured to deactivate the light source after a predetermined period of time, automatically deactivating the light source after the user 36 is provided adequate opportunity to view the display component 38.

### 2) Control Component

A control component 40 is the means by which users 36 interact with the player 34 and provide their instructions to the player 34. Different embodiments of players 34 can involve a wide variety of different control components 40. Control components 40 can also be referred to as controllers 40.

Controllers 40 can involve different types of buttons, knobs, dials, voice recognition components, and other types of physical and electronic mechanisms for receiving instructions from users 36 (collectively "buttons" 42).

For example, in an embodiment of the system 20 that involves a satellite radio player 34, buttons 42 can be used to change the channel and the volume of the player 34. Buttons 42 could also be used to manually activate and/or deactivate light sources.

### 3) Player Component

A player component 44 is the component of the player device 34 that allows the player device 34 to access the content unit 22. For example, in the example of a CD player, the player component 44 is the component of the CD player that actually reads the information located on the CD. In the context of a player 34 accessing content units 22 from a remote source such as a satellite radio station, the player component 44 is the electronics within the player 34 that allows the player 34 to access the satellite signal.

A player component 44 can also be referred to as a content access component 44.

### 4) Profiles

A profile 46 is bundle of information stored within the player 34 that relates to user preferences for a particular user 36 or a particular group of users 36. For example, a profile 46 could include the amount of time after an automatic activation of a backlight or other light source that the system 20 will automatically deactivate that same light source. Profiles 46 can influence the content units 36 made accessible to the user 36, as well as the ways content units 36 are organized within the player 34. For example, one user 36 might prefer classical music while another user 36 prefers jazz. One user 36 might prefer to listen to music at a relatively quiet volume while another user 36 might prefer a substantially louder volume. One user 36 may desire a greater period of time between the activation of the light source (such as a backlight), while another user may prefer to a relatively longer period of time.

### 5) Setup Menu

In some embodiments of the system 20, a setup menu 48 can be accessed directly on the player 34 while in other embodiments, the user 36 can access the setup menu 48 using other devices, such as a computer hooked up to a computer network such as the Internet. In such an embodiment, the device used to configure the player 34 would need to be connected to the player using some type of link, such as a cable, a wireless network, etc.

A setup menu 48 allows users 36 to create, modify, and delete profiles 46. The setup menu 48 can be configured to allow users 36 to submit instructions to the system 20 that relate to the activation and deactivation of the light source. In some embodiments, profiles 46 and setup menus 48 can also influence the luminosity of the light source. In the context of a backlight light source, an instruction can be referred to as a backlight instruction.

### 6) Activation Heuristic

An activation heuristic 50 is any process or methodology by which the system 20 automates or even influences the activation of the light source used to illuminate the display component 38. A common example of an activation heuristic 50 is the automated activation of the light source any time the label 24 changes, which indicates that the content unit 22 currently being played by the player 34 has just changed. A wide variety of different activation heuristics 50 can be included into the functionality of the system 20. The activation heuristic 50 can be influenced by the profile 46 of the applicable user 36, selections made from the setup menu 48, a setup heuristic 54, and a variety of processing rules 56 for the system 20.

Some embodiments of the system 20 can support highly sophisticated and nuanced activation heuristics 50. For example, in the context of a music player 34, the activation heuristic 50 could be configured to only activate a light source when the new label indicates a song is being played that has never been played on the player 34 before for the particular user 36.

### 7) Deactivation Heuristic

A deactivation heuristic 52 is any process by which the system 20 automates or even influences the deactivation of the light source used to illuminate the display component. A common example of a deactivation heuristic 52 is a backlight instruction which defines a predetermined length of time after the activation of the backlight in which the backlight is automatically deactivated. A wide variety of different activation heuristics 50 can be included into the functionality of the system 20. The deactivation heuristic 52 can be influenced by the profile 46 of the applicable user 36, selections made from the setup menu 48, a setup heuristic 54, and a variety of processing rules 56 for the system 20.

### 8) Setup Heuristic

A setup heuristic 54 is any process or methodology by which the system 20 allows users 36 to create user profiles 46 and navigate setup menus 48. A wide variety of different setup heuristics 54 can be included into the functionality of the system 20. Setup heuristics 54 are constrained by the rules 56 of the system 20. Different embodiments of the system 20 can be configured to offer different ranges of flexibility to users 36 with respect to setup heuristics 54.

### 9. Rules

A rule 56 is processing rule of the system 20 that cannot be altered by users 36. Processing rules 56 constrain the possible options available to users 36 in creating profiles 46, interacting with setup menus 48, etc.

### F) Users

A user 36 is typically a human being, although animals and machines can also potentially be users 36. Users 36 are the beneficiaries and/or recipients of the content units 22 played on the player 34.

### II. Subsystem views

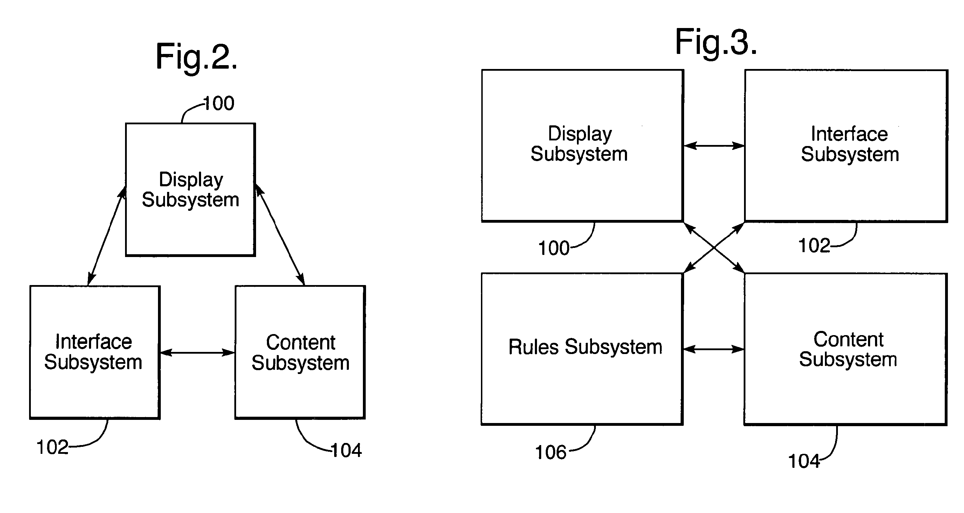

Figure 2 is a block diagram illustrating an example of a subsystemlevel view of a system 20 for playing content units 22. As indicated by the arrows originating from and pointing towards the various subsystems, each subsystem can interact and communicate with any other subsystem.

### A) Display Subsystem

A display subsystem 100 is the subsystem by which labels 24 and other information relating to particular content units 22 are displayed to users 36. The display subsystem 100 includes a light source which can be a backlight to a display component 38, or an external light that is configured to illuminate the display component 38. In some embodiments, the display subsystem 100 may include multiple light sources. In some embodiments, the display subsystem 100 can be configured to modify the luminosity of a light source, and influence the light source in ways beyond the mere activation or deactivation of the light source (such as color selection, or mode selection (e.g. flashing)).

### B) Interface Subsystem

An interface subsystem 102 can also be referred to a interaction or control subsystem 102 because it is the means by which users 36 interact with the player 34. The interface subsystem 102 allows users 36 can configure the functionality of the system 20. The interface subsystem 102 can be used to create, modify, and delete profiles 46, interact with the setup menu 48, and access the setup heuristic 54. The interface subsystem 102 can include the control component 40.

### C) Content Subsystem

A content subsystem 104 is the subsystem by which content units 22 and labels 24 are accessed by the player 34. The content subsystem 104 can also include the player component 44.

### D) Rules Subsystem

Figure 3 is a block diagram illustrating an example of a subsystemlevel view of a system 20 for playing media content units 22. A rules subsystem 106 can be configured to ultimately control how the various user 36 interactions with the system 20 influence the processing of the system 20.

### III. Process flow views

### A) Example 1

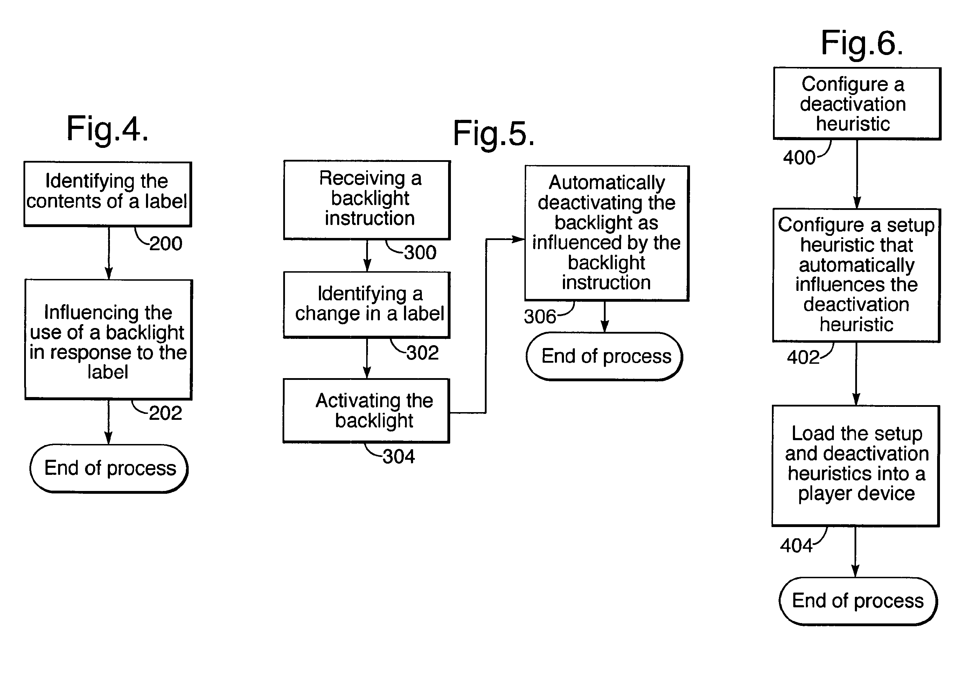

Figure 4 is a flow chart diagram illustrating an example of a process for influencing the activation of a backlight or other form of light source.

At 200, the contents of a label 24 are identified. Different embodiments will involve different types of information in the label 24 as well as potentially different quantities of information. Any individual bit of information within the label 24 can serve as a trigger for automated processing by the system 20. Moreover, changes between different labels 24 can also serve as triggers for automated processing by the system 20. In other words, the mere fact that the label 24 is different in some way can be enough to trigger or otherwise influence processing by the system 20.

At 202, the use of a light source such as a backlight is influenced by the information within the label 24. The light source can be activated, deactivated, brightened, darkened, moved, or otherwise influenced by the label 24.

### B) Example 2

Figure 5 is a flow chart diagram illustrating an example of a process for activating and deactivating a light source such as a backlight.

At 300, a light source instruction is received by the player 34 from the user 36. In a backlight embodiment, the instruction can be referred to as a backlight instruction. The instruction is transmitted by the user 36 using the setup menu 48. Such an instruction can be part of a profile 46 created by the user 36.

At 302, a change in the label 24 is identified by the player component 44, or some other component within the player 34.

At 304, a light source such as a backlight is activated in response to the identified change in the information within the label 24.

At 306, the light source is automatically deactivated after a predetermined period of time that was defined within the light source instruction at 300.

### C) Example 3

Figure 6 is a flow chart diagram illustrating an example of a process for loading a configuration heuristic into a player 34.

At 400, a deactivation heuristic 52 is configured by the manufacturer or distributor of the player 34.

At 402, a setup heuristic 54 and a set of rules 56 are identified in relation to the configurable deactivation heuristic 52.

At 404, the setup heuristic 54 and deactivation heuristic 52 are loaded into a player device 404 for use by consumers.

### IV. Alternative Embodiments

In accordance with the provisions of the patent statutes, the principles and modes of operation of this invention have been explained and illustrated in preferred embodiments. However, it must be understood that this invention may be practiced otherwise than is specifically explained and illustrated without departing from its spirit or scope.

## Claims

1. A method for reducing the power consumption of a device (34), comprising:
identifying the contents of a label (24), wherein the label (24) influences the activation of a light source associated with the device (34).

2. The method of claim 1, wherein the label (24) is associated with a unit of content (22) accessed by the device (34).

3. The method of claim 1, wherein the light source is activated without human intervention after the identification of the label (24).

4. The method of claim 1, wherein the light source is deactivated without human intervention after a predetermined period of time after the activation of the light source.

5. The method of claim 4, further comprising:
receiving a backlight instruction through a setup menu (48), wherein the backlight instruction influences the length of the predetermined period of time.

6. The method of claim 1, wherein the label (24) includes a song and an artist.

7. The method of claim 1, wherein the label (24) is a digital label received from a remote source, and wherein the remote source is a digital radio transmitter.

8. The method of claim 1, wherein a change in a label (24) is prompted by a song change, and wherein the change in the label activates the light source without human intervention.

9. The method of claim 1, wherein the device (34) provides for playing a plurality of digital content types.

10. The method of claim 1, wherein the device (34) includes at least one of a CD player, a DVD player, an MP3 player, and a PDA.

11. A system (20) for accessing digital media, comprising:
a light source; and
a player (34);
wherein said player (34) provides for receiving a label (24) with a unit (22) of content;
wherein said player (34) provides for triggering activation of said light source upon receipt of a label (24); and
wherein said player (34) provides for triggering deactivation of said light source after a passage of a predetermined period of time.

12. The system (20) of claim 11, wherein said label (24) is transmitted by a remote source.

13. The system (20) of claim 11, wherein said label (24) and said unit (22) of content reside on a storage device (30).

14. The system (20) of claim 11, wherein said player (34) provides for a setup instruction, wherein said setup instruction influences said predetermined period of time.

15. The system (20) of claim 11, wherein player (34) is located within a vehicle, wherein said label (24) is a digital label transmitted through a digital radio signal.

16. The system (20) of claim 11, wherein said activation of said light source and said deactivation of said light source occur without human intervention.

17. The system (20) of claim 11, wherein said light source provides for activation with a pressing of a button (42).

18. A device (34) for playing digital media content (22), comprising:
a display component (38), said display component providing for a light source and a label (24);
a player component (44), said player component (44) providing for playing a content unit (22); and
a controller component (40), said controller component (40) providing for a setup instruction;
wherein said label (24) is associated with said content unit (22); and
wherein said setup instruction and said label (24) influence the activation of said light source.

19. The device (34) of claim 18, wherein:
said player component (44) activates and deactivates said light source without human intervention.

20. The device (34) of claim 18,
wherein said content unit (22) includes a song; and
wherein said label (24) includes a title and an artist.
